# EUROPEAN PATENT SPECIFICATION

(11) **EP 3 361 748 B1**
(45) Date of publication and mention of the grant of the patent: **06.11.2019**
(21) Application number: 18156133.3
(22) Date of filing: 09.02.2018
(51) Int. Cl.: H04Q 1/02

(54) **MOUNTING SYSTEM FOR TELECOMMUNICATIONS EQUIPMENT**
MONTAGESYSTEM FÜR TELEKOMMUNIKATIONSANLAGE
SYSTÈME DE MONTAGE POUR ÉQUIPEMENT DE TÉLÉCOMMUNICATIONS

(30) Priority: 10.02.2017 US 201762457224 P
(43) Date of publication of application: 15.08.2018
(73) Proprietor: Commscope Technologies LLC, Hickory, NC 28602 (US)
(72) Inventor: SCHÜMANN, Sven, 14974 Ludwigsfelde (DE); GOTZMANN, Andreas, 12357 Berlin (DE)
(74) Representative: Murgitroyd & Company

(56) References cited:
- WO-A2-00/72646
- DE-A1-102013 200 963
- US-A1- 2008 130 244

## Description

### Background

Telecommunications equipment mounting frames are generally known in the art. The mounting frames are traditionally installed to a fixed surface, such as a set of rails, using a clamping system that requires a technician to install using tools. The installation process can be tedious and time consuming. Such an example is disclosed by the document DE102013200963, Tyco Electronics, published on 24 July 2014. Further, if the mounting frame is being installed in an area that has limited access, the technician may be further inconvenienced and mounting may simply not be possible. Therefore, improvements in mounting frames are desired.

### Summary

The present disclosure relates generally to a mounting frame for telecommunications equipment. In one possible configuration, and by non-limiting example, the mounting frame includes flexible clips that allow the user to install and uninstall the mounting frame in tight spaces while also minimizing the tools needed.

In a first aspect of the present disclosure, a mounting frame for telecommunications equipment is disclosed. The mounting frame includes a main frame that includes a back plate and at least one set of module mounting arms that extend from the back plate. The module mounting arms are configured to receive at least one telecommunications module. The mounting frame includes at least one mounting member fixed to the back plate. The at least one mounting member has at least one flexible clip that extends from the back plate, opposite the module mounting arms.

In a second aspect of the present disclosure, a telecommunications system is disclosed. The telecommunications system includes a mounting structure that has at least a first edge and a second edge. The first and second edges are generally parallel and spaced apart from one another. The telecommunications system includes a mounting frame. The mounting frame includes a main frame that includes a back plate and at least one set of module mounting arms that extend from the back plate. The module mounting arms are configured to receive at least one telecommunications module. The mounting frame includes at least one mounting member fixed to the back plate, the at least one mounting member has at least one flexible clip that extends from the back plate, opposite the module mounting arms. The least one mounting member includes a pair of tabs that extend outwardly to sides of the mounting frame, beyond the back plate of the main frame. The at least one flexible clip is configured to engage with at least one of the first and second edges of the mounting structure, and the pair of tabs are configured to simultaneously engage the mounting structure.

In a third aspect of the present disclosure, a telecommunications system is disclosed. The telecommunications system includes a main frame that includes a back plate and at least one set of module mounting arms that extend from the back plate. The module mounting arms are configured to receive at least one module. The telecommunications system includes at least one module that is positionable on the at least one set of module mounting arms. The telecommunications system includes at least one mounting member fixed to the back plate. The at least one mounting member has at least one flexible clip extending from the back plate, opposite the module mounting arms.

A variety of additional aspects will be set forth in the description that follows. The aspects can relate to individual features and to combinations of features. It is to be understood that both the foregoing general description and the following detailed description are exemplary and explanatory only and are not restrictive of the broad inventive concepts upon which the embodiments disclosed herein are based.

### Brief Description of the Drawings

The following drawings are illustrative of particular embodiments of the present disclosure and therefore do not limit the scope of the present disclosure. The drawings are not to scale and are intended for use in conjunction with the explanations in the following detailed description. Embodiments of the present disclosure will hereinafter be described in conjunction with the appended drawings, wherein like numerals denote like elements.
FIG. 1 illustrates a front perspective view of a mounting frame containing a plurality of modules;
FIG. 2 illustrates a rear perspective view of the mounting frame and modules of FIG. 1;
FIG. 3 illustrates a front perspective view of the mounting frame of FIG. 1 mounted to a fixed surface;
FIG. 4 illustrates a front view of the mounting frame of FIG. 1 mounted to the fixed surface;
FIG. 5 illustrates a rear perspective view of the mounting frame of FIG. 1 mounted to the fixed surface;
FIG. 6 illustrates a rear perspective view of a portion of the mounting frame of FIG. 1 mounted to the fixed surface;
FIG. 7 illustrates a rear view of the mounting frame of FIG. 1 mounted to the fixed surface;
FIG. 8 illustrates a top view of the mounting frame of FIG. 1 mounted to the fixed surface;
FIG. 9 illustrates a top view of the mounting frame of FIG. 1 unmounted to the fixed surface; and
FIG. 10 illustrates a top view a portion of the mounting frame of FIG. 1.

### Detailed Description

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

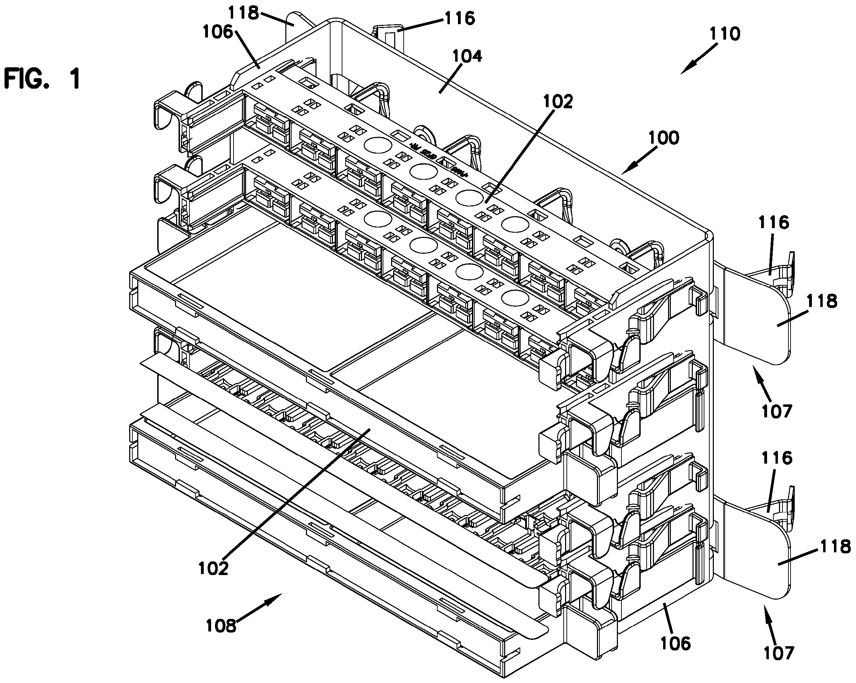

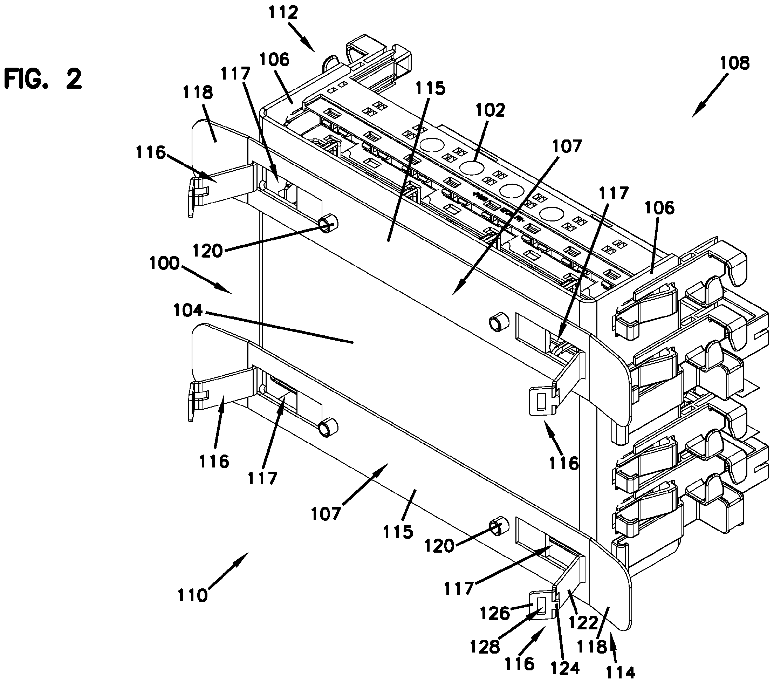

FIG. 1 shows a front perspective view of a mounting frame 100 containing a plurality of modules 102. FIG. 2 shows a rear perspective view of the mounting frame 100. The mounting frame 100 includes a back plate 104, at least one set of module mounting arms 106, and at least one mounting member 107.

The mounting frame 100 includes a front 108, a rear 110, a top 112, and a bottom 114. Throughout this disclosure, references to orientation (e.g., front(ward), rear(ward), in front, behind, above, below, high, low, back, top, bottom, under, underside, etc.) of structural components shall be defined by that component's positioning in FIGS. 1 and 2 relative to, as applicable, the front 108, rear 110, top 112, and bottom 114 of the mounting frame 100, regardless of how the mounting frame 100 may be positioned. The mounting frame 100 can mounted in a variety of different ways and orientations. For example, the mounting frame 100 can be mounted in an inverted fashion from what is shown in FIGS. 1 and 2. In other examples, the mounting frame 100 can be mounted in a rotated fashion from what is shown in FIGS. 1 and 2.

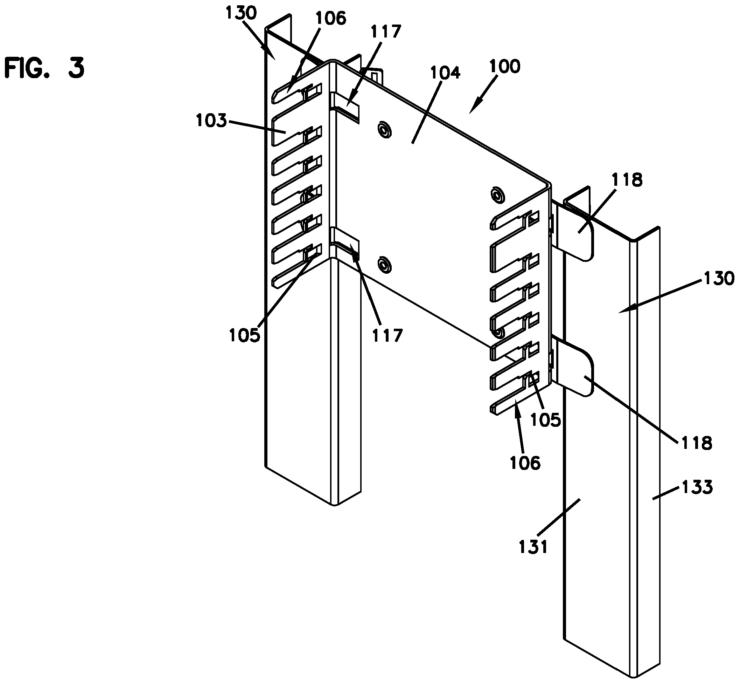

The mounting frame 100 is configured to securely mount at least one module 102 to a fixed surface (shown in FIG. 3). In some examples, the mounting frame 100 is configured to hold a single module 102. In other examples, the mounting frame 100 is configured to hold a plurality of modules 102. In the depicted examples, the mounting frame 100 is configured to hold six modules 102.

Further, the mounting frame 100 is configured to allow the user to install the mounting frame 100 without using tools. This allows for a quick installation. The mounting frame 100 also allows the user to install and uninstall the frame 100 from the front 108 (module side) of the mounting frame 100. This is useful in scenarios where side and rear access to the mounting frame 100 is limited.

The modules 102 can be of a variety of different types. For example, the modules can be terminal blocks for telecommunications and data technology. The terminal blocks can include wire connection contacts to facilitate connections made on the front side of the block with connections made at the rear side of the block. In other examples, the module 102 can be a label holder so as to allow a user to label a set of modules 102.

The module mounting arms 106 extend away from the back plate 104 of the mounting frame 100. The module mounting arms 106 are sized and shaped to receive and secure the modules 102 to the mounting frame 100. The mounting arms 106 will be discussed in more detail with respect to FIG. 3

In the depicted embodiment, the mounting frame 100 includes a pair of mounting members 107 secured to the rear 110 of the back plate 104. In some examples, the mounting members 107 and back plate 104 are a single piece. In other examples, the mounting members 107 are formed from a different material from the back plate 104. In some examples, the material the mounting members 107 are formed of is more elastic than the material used to form the back plate 104.

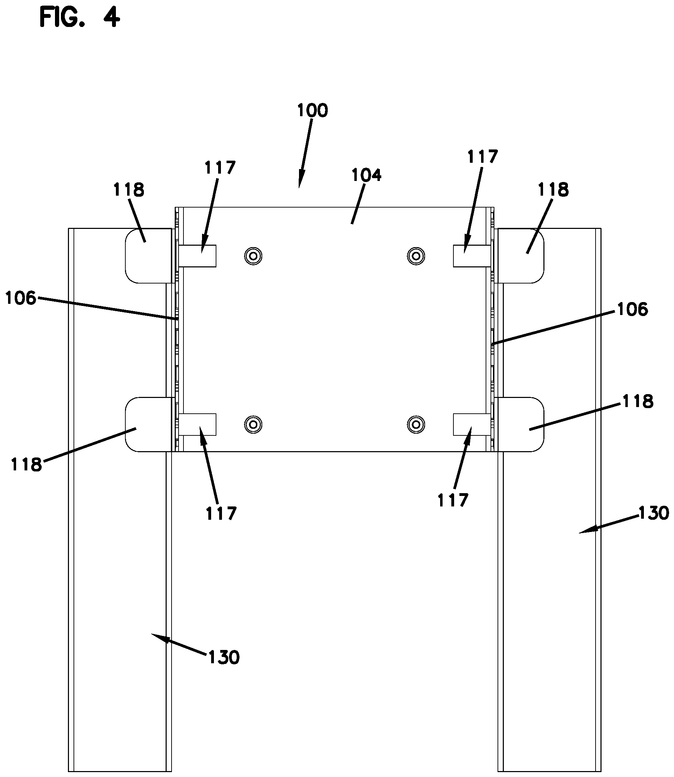

The mounting members 107 each include a main body 115 and a pair of flexible clips 116 that extend from the main body 115. In some examples, the mounting members 107 include just a single flexible clip 116. The clips 116 extend away from the back plate 104 toward the rear 110 of the mounting frame 100, opposite the mounting arms 106. The flexible clips 116 are configured to aid in securing the mounting frame 100 to a fixed structure (shown in FIGS. 3 and 4). Immediately adjacent each flexible clip 116 is an aperture 117 defined by both the mounting member 107 and the back plate 104. Each mounting member 107 also includes a pair of tabs 118 that are configured to interface with a fixed structure during mounting in order to help stabilize the mounting frame 100. In some examples, the tabs 118 are at least partially flexible.

The main body 115 is fixed to the back plate 104. In the depicted example, the main body 115 is fixed to the back plate 104 by fasteners 120. In other examples, the main body 115 is welded to the back plate 104. In still other examples, the main body 115 and the back plate 104 are the same piece.

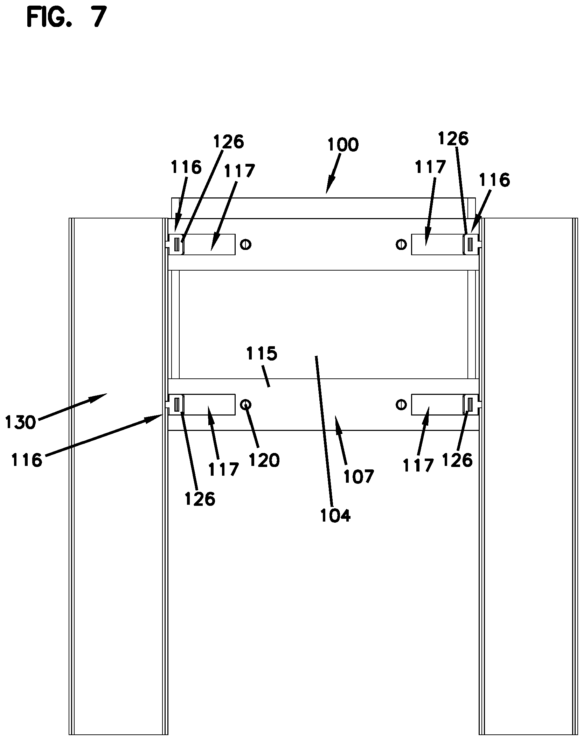

Each flexible clip 116 includes an arm 122, a projection 124, and a release lever 126. The arm 122 is flexibly connected to the main body 115 at one end. The projection 124 and release lever 126 are positioned at the opposite end from the arm 122. In some examples, the flexible clip 116 is configured to deflect at least partially about the main body 115. The flexible clip 116 will be discussed further with respect to FIG. 7.

The projection 124 extends from the arm 122, generally on an opposite side from the release lever 126. The projection 124 is configured to latch onto a fixed surface so as to secure the mounting frame 100 in place.

The release lever 126 is configured to be operated by the user to disengage the flexible clip 116, specifically the projection 124, from a fixed surface. In some examples, the release lever 126 can be operated by hand if the user has access to the release lever 126. The release lever 126 includes an aperture 128 so as to allow the user to operate the release lever with a tool, such as a screwdriver. For example, the user can access the release lever 126 of flexible clip 116 from the front 108 of the mounting frame 100 via the aperture 117 immediately adjacent each flexible clip 116.

FIG. 3 shows a front perspective view of the mounting frame 100, without modules 102, attached to a fixed surface 130. In the depicted embodiment, the fixed surface is a pair of parallel rails spaced apart from one another. FIG. 4 shows a front view of the mounting frame 100 attached to the fixed surface 130.

The fixed surface 130 can include a face 131 and at least one edge 133 extending generally perpendicular to the face 130. In the depicted example, the fixed surface 130 includes a pair of edges 133. The edges terminate at an end 135. In some examples, the fixed surface 130 is mounted in a cabinet. In other examples, the fixed surface 130 is mounted to a floor, ceiling or additional fixed frame member.

The arms 106 are shown to include a unique construction to receive modules 102. For example, the arms 106 can be sized and shaped to be received by a similarly sized and shaped recess in the module 102. In some examples the arms 106 can be sized differently to have planar portions 103 varying widths to accommodate differently sized modules. In some examples, the arms 106 can further include apertures 105. In some examples, the module 102 can be configured to lock in place on the arms 106. The arms 106 can be constructed in a variety of different configurations to mate with a variety of differently configured modules 102.

The tabs 118 of the mounting frame 100 are shown interfacing with the fixed surface 130, specifically with the face 131 of the fixed surface 130. The tabs 118 stabilize the mounting frame 100 against the fixed surface 130 so that the mounting frame 100 does not move inadvertently. In some examples, the tabs 118 are configured to be flexible so as to help stabilize the mounting frame 100 and further secure the mounting frame 100 to the fixed surface 130. In some examples, the tabs exert a force against the face 131 to firmly secure the mounting frame 100 to the fixed surface 130.

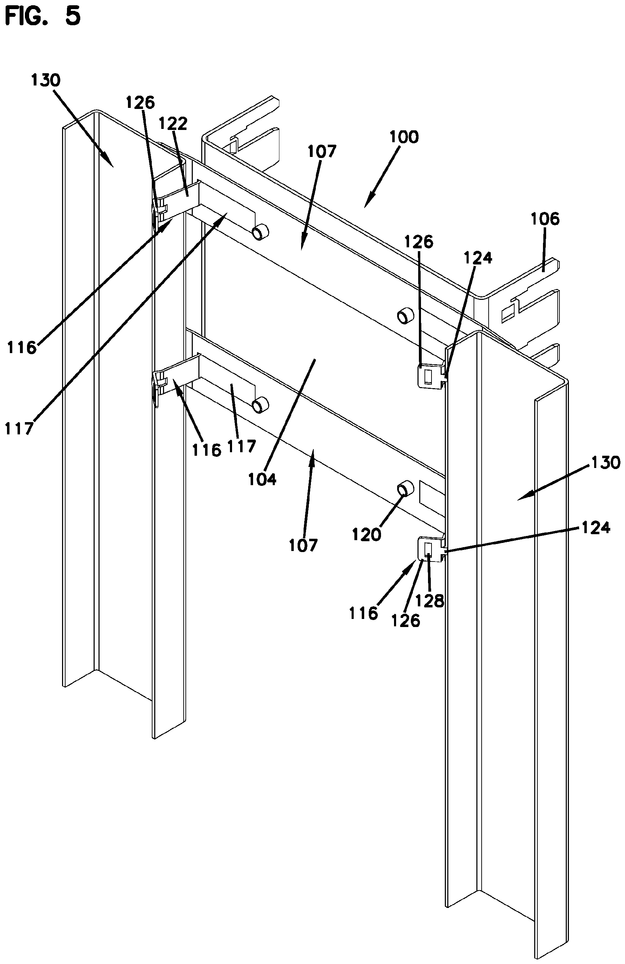

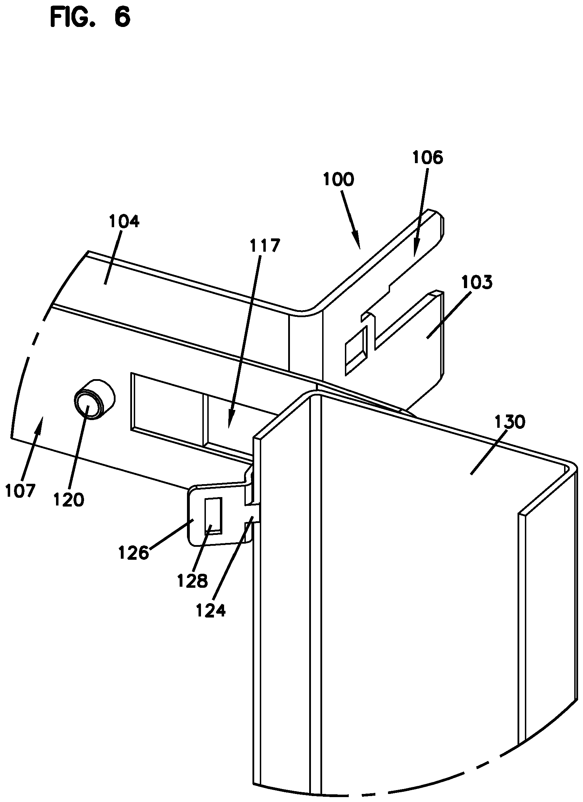

FIG. 5 shows a rear perspective view of the mounting frame 100 attached to the fixed surface 130. FIG. 6 shows a portion of the mounting frame 100, specifically focused on one flexible clip. FIG. 7 shows a rear view of the mounting frame 100 attached to the fixed surface 130.

As shown, the projections 124 of each flexible clip 116 are engaged with the fixed surface 130, specifically the end 135 of an edge 133. Due to the flexible springlike nature of the flexible clips 116, when mounted, the flexible clips 116 exert a force outward against the fixed surface 130. This force helps to prevent the mounting frame 100 from sliding about the fixed surface 130. Further, the mounting frame 100 is secured to the fixed surface 130 so that it cannot be pulled away from, or pushed past, the fixed surface due to the tabs 118 and the projections 124. As shown in FIG. 6, the projections 124 are engaged with end 135 of the edge 133 of the fixed surface so as aid in preventing movement of the mounting frame 100. Therefore, the mounting frame 100 will remain secured to the fixed surface until the release levers 126 of the flexible clips are operated.

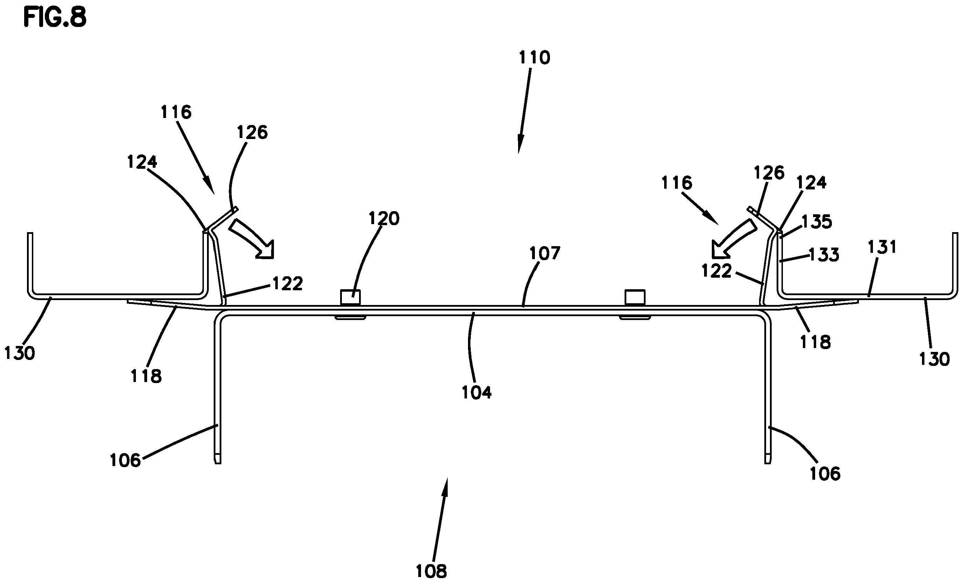

FIG. 8 shows a top view of the mounting frame 100 attached to the fixed surface 130. The tabs 118 and projections 124 of the clips are shown to be engaged with the face 131 and the edge 133 of fixed surface 130, respectively. To release the flexible clips 116, specifically the projections 124, the release levers 126 of each flexile clip 116 are flexed inward toward the back plate 104 of the mounting frame 100. The flexing direction is generally depicted by arrows in FIG. 8. As stated above, the flexing of the release levers 126 can be accomplished by the hand of the user if there is access to the rear 110 of the mounting frame 100. Alternatively, access to the release levers 126 can be gained via apertures 117 defined by both the mounting member 107 and the back plate 104. This allows the user to flex the release levers 126 using a tool. Specifically, a tool can be inserted into the aperture 128 of each release lever 126 and moved to flex the release levers 126.

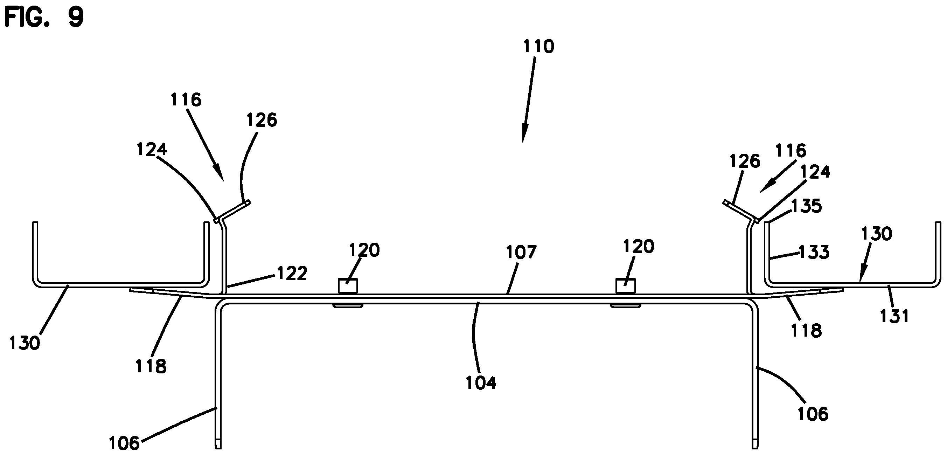

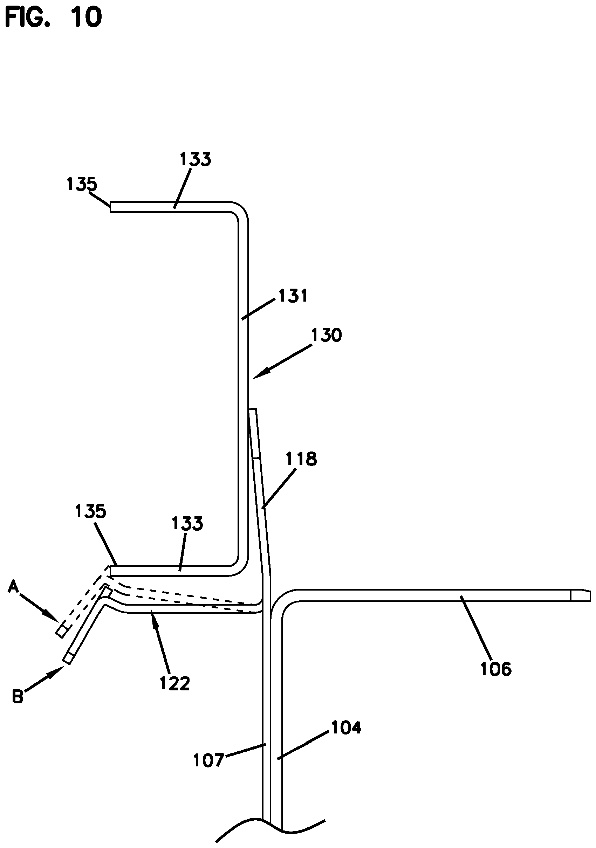

FIG. 9 shows the mounting frame 100 unmounted from the fixed surface 130 with the arms 122 flexed inward. Accordingly, FIG. 10 shows the movement of the arms 122 when unmounting the mounting frame 100 from the fixed surface 130. The arms 122 can have an extended position A, as shown by the dashed lines in FIG. 10, and a released position B, as shown by the position of the arm 122 in FIG. 10. As noted above, the arms 122 can be flexed to move between the released position B and the extended position A. In some examples, the arms 122 are biased toward the extended position. In some examples, when mounted to the fixed surface 130, the arms 122 are in the extended position.

The various embodiments described above are provided by way of illustration only and should not be construed to limit the claims attached hereto. Those skilled in the art will readily recognize various modifications and changes that may be made without following the example embodiments and applications illustrated and described herein, and without departing from the scope of the following claims.

## Claims

1. A mounting frame (100) for telecommunications equipment comprising:
a main frame including a back plate (104) and at least one set of module mounting arms (106) extending from the back plate, the module mounting arms being configured to receive at least one telecommunications module (102); the mounting frame **characterized in that** it provides
at least one mounting member fixed to the rear of the back plate, the at least one mounting member having at least one flexible clip (116) extending from the back plate, opposite the module mounting arms, wherein the at least one flexible clip includes an arm (122) having a projection (124) extending from one side, and the least one mounting member includes a pair of tabs (118) extending outwardly, beyond the back plate of the main frame, to sides of the mounting frame, and wherein a fixed surface is configured to be positioned between the projection and at least one tab of the pair of tabs.

2. The mounting frame of claim 1, further comprising a release lever extending from an opposite side of the flexible clip than a projection.

3. The mounting frame of claim 2, wherein the release lever includes a tool aperture.

4. The mounting frame of claims 1-3, wherein the back plate defines at least one aperture, the at least one aperture being immediately adjacent the at least one flexible clip.

5. The mounting frame of claims 1-4 wherein the mounting member includes a second flexible clip extending from the back plate, opposite the module mounting arms.

6. The mounting frame of claim 5, wherein the back plate defines a pair of apertures, the apertures being immediately adjacent the first and second flexible clips respectively.

7. The mounting frame of claim 6, wherein the flexible clips each include an arm having a projection extending from one side and a release lever extending from an opposite side.

8. The mounting frame of claims 1-7, wherein the at least one flexible clip is configured to engage with at least one of a first edge and a second edge of a mounting structure, the first and second edges being generally parallel and spaced apart from one another.

9. The mounting frame of claim 8, wherein the pair of tabs are configured to simultaneously engage the mounting structure.

10. The mounting frame of claims 8-9, wherein the mounting member includes a second flexible clip extending from the back plate, opposite the module mounting arms, wherein the first flexible clip engages with the first edge of the mounting structure and the second flexible clip engages with the second edge of the mounting structure.

11. The mounting frame of claim 10, wherein the flexible clips each include an arm having a projection extending from one side and a release lever extending from an opposite side, wherein the projection of the first flexible clip engages with the first edge, and wherein the projection of the second flexible clip engages with the second edge.

12. The mounting frame of claims 1-11, further comprising at least one telecommunications module mounted to the module mounting arms.

13. The mounting frame of claims 1-12 further comprising a plurality of telecommunications modules mounted to the module mounting arms.

## Patentansprüche

1. Ein Montagerahmen (100) für Telekommunikationsanlagen, der Folgendes beinhaltet:
einen Hauptrahmen, der eine Rückenplatte (104) und mindestens einen Satz von Modul-Montagearmen (106), die sich von der Rückenplatte erstrecken, umfasst, wobei die Modul-Montagearme konfiguriert sind, um mindesten ein Telekommunikationsmodul (102) aufzunehmen; wobei der Montagerahmen **dadurch gekennzeichnet ist, dass** er Folgendes bereitstellt:
mindestens ein an der Hinterseite der Rückenplatte befestigtes Montageelement, wobei das mindestens eine Montageelement mindestens eine flexible Klammer (116) aufweist, die sich, den Modul-Montagearmen gegenüberliegend, von der Rückenplatte erstreckt, wobei die mindestens eine flexible Klammer einen Arm (122) mit einem Vorsprung (124) umfasst, der sich von einer Seite erstreckt, und wobei das mindestens eine Montageelement ein Paar Zungen (118) umfasst, die sich seitlich von dem Montagerahmen nach außen hin, über die Rückenplatte des Hauptrahmens hinaus erstrecken, und wobei eine feststehende Oberfläche konfiguriert ist, um zwischen den Vorsprung und die mindestens eine Zunge des Paars Zungen positioniert zu werden.

2. Montagerahmen gemäß Anspruch 1, der ferner einen Freigabehebel beinhaltet, der sich von einer einem Vorsprung gegenüberliegenden Seite der flexiblen Klammer erstreckt.

3. Montagerahmen gemäß Anspruch 2, wobei der Freigabehebel eine Werkzeugaufnahmeaussparung umfasst.

4. Montagerahmen gemäß Ansprüchen 1-3, wobei die Rückenplatte mindestens eine Aussparung definiert, wobei die mindestens eine Aussparung unmittelbar neben der mindestens einen flexiblen Klammer gelegen ist.

5. Montagerahmen gemäß Ansprüchen 1-4, wobei das Montageelement eine zweite flexible Klammer umfasst, die sich, den Modul-Montagearmen gegenüberliegend, von der Rückenplatte erstreckt.

6. Montagerahmen gemäß Anspruch 5, wobei die Rückenplatte ein Paar Aussparungen definiert, wobei die Aussparungen jeweils unmittelbar neben der ersten und zweiten flexiblen Klammer gelegen sind.

7. Montagerahmen gemäß Anspruch 6, wobei die flexiblen Klammern jeweils einen Arm mit einem Vorsprung, der sich von einer Seite erstreckt, und einen Freigabehebel, der sich von einer gegenüberliegenden Seite erstreckt, umfassen.

8. Montagerahmen gemäß Ansprüchen 1-7, wobei die mindestens eine flexible Klammer konfiguriert ist, um in mindestens eine von einer ersten Kante und einer zweiten Kante einer Montagestruktur einzugreifen, wobei die ersten und zweiten Kanten im Allgemeinen parallel zueinander und voneinander beabstandet sind.

9. Montagerahmen gemäß Anspruch 8, wobei das Paar Zungen konfiguriert ist, um gleichzeitig in die Montagestruktur einzugreifen.

10. Montagerahmen gemäß Ansprüchen 8-9, wobei das Montageelement eine zweite flexible Klammer umfasst, die sich, den Modul-Montagearmen gegenüberliegend, von der Rückenplatte erstreckt, wobei die erste flexible Klammer in die erste Kante der Montagestruktur eingreift und die zweite flexible Klammer in die zweite Kante der Montagestruktur eingreift.

11. Montagerahmen gemäß Anspruch 10, wobei die flexiblen Klammern jeweils einen Arm mit einem Vorsprung, der sich von einer Seite erstreckt, und einen Freigabehebel, der sich von einer gegenüberliegenden Seite erstreckt, umfassen, wobei der Vorsprung der ersten flexiblen Klammer in die erste Kante eingreift, und wobei der Vorsprung der zweiten flexiblen Klammer in die zweite Kante eingreift.

12. Montagerahmen gemäß Ansprüchen 1-11, der ferner mindestens ein Telekommunikationsmodul beinhaltet, das an die Modul-Montagearme montiert ist.

13. Montagerahmen gemäß Ansprüchen 1-12, der ferner eine Vielzahl von Telekommunikationsmodulen beinhaltet, die an die Modul-Montagearme montiert sind.

## Revendications

1. Un cadre de montage (100) pour équipement de télécommunication comprenant :
un cadre principal incluant une plaque dorsale (104) et au moins un ensemble de bras de montage de module (106) s'étendant à partir de la plaque dorsale, les bras de montage de module étant configurés pour recevoir au moins un module de télécommunication (102) ;
le cadre de montage étant **caractérisé en ce qu'**il fournit au moins un élément de montage fixé à l'arrière de la plaque dorsale, ledit au moins un élément de montage ayant au moins un clip flexible (116) s'étendant depuis la plaque dorsale, à l'opposé des bras de montage de module, l'au moins un clip flexible incluant un bras (122) ayant une projection (124) s'étendant depuis un côté, et l'au moins un élément de montage incluant une paire de pattes (118) s'étendant vers l'extérieur, au-delà de la plaque dorsale du cadre principal, jusqu'à des côtés du cadre de montage, et dans lequel une surface fixe est configurée pour être positionnée entre la projection et au moins une patte de la paire de pattes.

2. Le cadre de montage de la revendication 1, comprenant en outre un levier de libération s'étendant depuis un côté opposé du clip flexible par rapport à une projection.

3. Le cadre de montage de la revendication 2, dans lequel le levier de libération inclut une ouverture d'outil.

4. Le cadre de montage des revendications 1 à 3, dans lequel la plaque dorsale définit au moins une ouverture, l'au moins une ouverture étant immédiatement adjacente à l'au moins un clip flexible.

5. Le cadre de montage des revendications 1 à 4 dans lequel l'élément de montage inclut un deuxième clip flexible s'étendant depuis la plaque dorsale, à l'opposé des bras de montage de module.

6. Le cadre de montage de la revendication 5, dans lequel la plaque dorsale définit une paire d'ouvertures, les ouvertures étant immédiatement adjacentes aux premier et deuxième clips flexibles respectivement.

7. Le cadre de montage de la revendication 6, dans lequel les clips flexibles incluent chacun un bras ayant une projection s'étendant depuis un côté et un levier de libération s'étendant depuis un côté opposé.

8. Le cadre de montage des revendications 1 à 7, dans lequel l'au moins un clip flexible est configuré pour venir en prise avec au moins un bord parmi un premier bord et un deuxième bord d'une structure de montage, les premier et deuxième bords étant généralement parallèles et espacés l'un de l'autre.

9. Le cadre de montage de la revendication 8, dans lequel la paire de pattes est configurée pour venir simultanément en prise avec la structure de montage.

10. Le cadre de montage des revendications 8 à 9, dans lequel l'élément de montage inclut un deuxième clip flexible s'étendant depuis la plaque dorsale, à l'opposé des bras de montage de module, le premier clip flexible venant en prise avec le premier bord de la structure de montage et le deuxième clip flexible venant en prise avec le deuxième bord de la structure de montage.

11. Le cadre de montage de la revendication 10, dans lequel les clips flexibles incluent chacun un bras ayant une projection s'étendant depuis un côté et un levier de libération s'étendant depuis un côté opposé, la projection du premier clip flexible venant en prise avec le premier bord, et la projection du deuxième clip flexible venant en prise avec le deuxième bord.

12. Le cadre de montage des revendications 1 à 11, comprenant en outre au moins un module de télécommunication monté sur les bras de montage de module.

13. Le cadre de montage des revendications 1 à 12, comprenant en outre une pluralité de modules de télécommunication montés sur les bras de montage de module.
